Europäisches Patentamt

European Patent Office

Office européen des brevets

(19)

(11) Veröffentlichungsnummer: **0 212 056**
**B1**

(12) **EUROPÄISCHE PATENTSCHRIFT**

(45) Veröffentlichungstag der Patentschrift:
13.06.90

(21) Anmeldenummer: 86104708.2

(22) Anmeldetag: 07.04.86

(51) Int. Cl.⁵: **F16K 31/05**, F16H 57/00,
F16K 35/00

(54) Antriebsvorrichtung für Ventile.

(30) Priorität: 07.06.85 DE 3520502

(43) Veröffentlichungstag der Anmeldung:
04.03.87 Patentblatt 87/10

(45) Bekanntmachung des Hinweises auf die Patenterteilung:
13.06.90 Patentblatt 90/24

(84) Benannte Vertragsstaaten:
CH FR GB IT LI

(56) Entgegenhaltungen:
DE-A- 1 500 418
DE-A- 2 106 933
DE-B- 1 170 211
DE-B- 1 199 088
GB-A- 1 497 088
US-A- 3 258 985
US-A- 3 908 959
US-A- 4 361 308

(73) Patentinhaber: Müller, Fritz, Neuer Wasen 6,
D-7118 Ingelfingen-Criesbach(DE)

(72) Erfinder: Müller, Fritz, Neuer Wasen 6,
D-7118 Ingelfingen-Criesbach(DE)
Erfinder: Pienta, Lothar, Teichstrasse 17,
D-7118 Ingelfingen 2(DE)

(74) Vertreter: Leyh, Hans, Dr.-Ing., Patentanwälte Berendt,
Leyh & Hering Innere Wiener Strasse 20,
D-8000 München 80(DE)

**Beschreibung**

Die Erfindung betrifft eine Antriebsvorrichtung für die Spindel eines Ventils, insbesondere eines Membranventils, bestehend aus einem Elektromotor mit nachgeschaltetem Zahnriemen-Getriebe, über das eine mit der Spindel gekoppelte Mutter betätigbar ist, wobei der Elektromotor und das Zahnriemen-Getriebe zur Achse der Spindel versetzt angeordnet sind.

Aus der DE-B 2 106 933 ist eine Antriebsvorrichtung für die Spindel eines Ventils bekannt, wobei die Spindel von einem Elektromotor über ein Zahnriemen-Getriebe und eine Mutter angetrieben wird. Eine Drehbewegung des Elektromotors bewirkt über den Zahnriemen eine Drehung der Mutter und der damit gekoppelten Spindel; eine Sperre gegen eine Weiterdrehung der Mutter bei abgeschaltetem Antrieb ist aber nicht vorgesehen.

Der Erfindung liegt demgegenüber die Aufgabe zugrunde, eine Antriebsvorrichtung der eingangs genannten Art derart weiterzubilden, daß ein Weiterlauf oder ein Rücklauf der Mutter und damit der von ihr angetriebenen Ventilspindel bei abgeschaltetem Antrieb blockiert wird.

Nach der Erfindung wird dies dadurch erreicht, daß der die Mutter treibende Zahnriemen durch eine auf dem treibenden Trum angeordnete Rolle belastet ist, welche Rolle mit einem Hebel versehen ist, der eine Raste aufweist, die bei stillstehendem Getriebe in eine Rasterung am Umfang der Mutter einrastet und dadurch diese gegen Drehung blockiert.

Weitere Merkmale der Erfindung ergeben sich aus den Unteransprüchen.

Eine beispielsweise Ausführungsform der Erfindung wird nachfolgend anhand der Zeichnung erläutert, in der

Fig. 1 schematisch im Schnitt eine Antriebsvorrichtung zeigt.

Fig. 2 zeigt schematisch eine Draufsicht auf das Getriebe der Antriebsvorrichtung.

Fig. 3a und 3b zeigen in Draufsicht bzw. in Seitenansicht eine Einrichtung zum Blockieren der Mutter im Ruhezustand.

Fig. 4 zeigt schematisch in Draufsicht eine Stirnfläche der Mutter, die mit einer spiralförmigen Nut versehen ist.

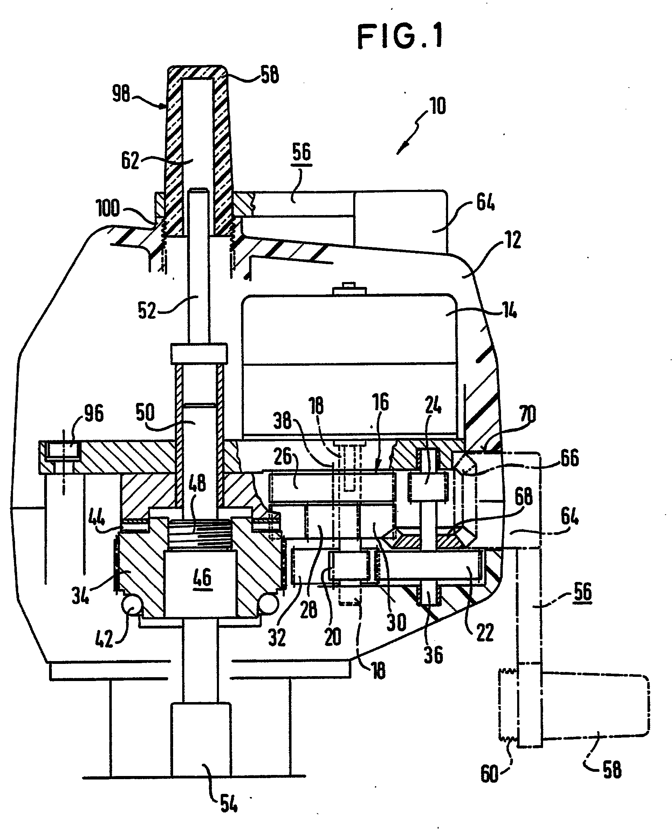

Fig. 1 zeigt eine Antriebsvorrichtung 10 für ein Ventil, z.B. die Spindel eines Membranventils, die axial hin- und herbewegbar ist.

Die Antriebsvorrichtung 10 hat ein Gehäuse 12, z.B. aus einem geeigneten Kunststoff, das zweckmäßigerweise zweiteilig ausgebildet ist, wobei die beiden Teile geeignet miteinander verschraubt sind, was durch eine Schraube 96 angedeutet ist.

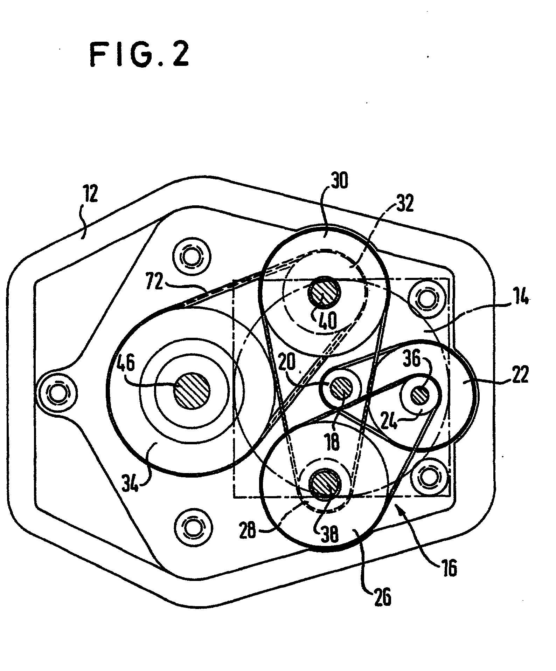

Im Gehäuse 12 ist ein Elektromotor 14 angeordnet, dem ein Getriebe 16 nachgeschaltet ist. Der Elektromotor hat eine Abtriebswelle 18, auf der ein Ritzel 20 sitzt, das, wie Fig. 2 zeigt, über einen Zahnriemen mit einem Zahnrad 22 gekoppelt ist. Das Zahnrad 22 sitzt auf einer Achswelle 36, auf der ferner ein Zahnrad 24 sitzt, das über einen Zahnriemen mit einem Zahnrad 26 gekoppelt ist. Das Zahnrad 26 sitzt auf einer Achswelle 38, auf der ferner ein Zahnrad 28 sitzt, das über einen Zahnriemen mit einem Zahnrad 30 gekoppelt ist. Das Zahnrad 30 sitzt auf einer Achswelle 40, auf der ferner ein Zahnrad 32 sitzt, das über einen Zahnriemen 72 mit einer Mutter 34 gekoppelt ist.

Wie sich aus Fig. 2 ergibt, geht die Übersetzung ins Langsame, d.h. der Durchmesser des Zahnrades 22 ist größer als der des Ritzels 20, der Durchmesser des Zahnrades 26 ist größer als der des Zahnrades 24, der Durchmesser des Zahnrades 30 ist größer als der des Zahnrades 28 und der Durchmesser der Mutter 34 ist größer als der des Zahnrades 32.

Selbstverständlich sind auch andere Durchmesser-Verhältnisse und andere Übersetzungen im einzelnen und insgesamt möglich.

Die Achswellen 36, 38, 40 sind geeignet im Gehäuse gelagert, was jedoch aus Gründen der Übersichtlichkeit nicht dargestellt ist.

Die Mutter 34 ist im Gehäuse 12 mittels Kugellager 42 und Rollenlager 44 drehbar gelagert, jedoch axial ortsfest angeordnet.

Die Mutter 34 ist mit der sie durchsetzenden Spindel 46 mittels eines Bewegungsgewindes 48 gekoppelt, das beispielsweise ein Trapezgewinde oder ein Kugelumlaufgewinde sein kann. Bei Drehung der Mutter 34 wird daher über dieses Gewinde die Spindel 46 axial in der einen oder anderen Richtung, je nach Drehrichtung der Mutter 34, verschoben. Die Spindel 46 ist, was jedoch nicht dargestellt ist, geeignet axial geführt, um eine Drehung der Spindel zu verhindern.

Wie Fig. 1 zeigt, sind der Elektromotor 14 und das Getriebe 16 seitlich im Abstand von der Achse der Spindel 46 und vollkommen außerhalb von deren Bewegungsbereich eingebaut, so daß die Spindel 46 axial ungehindert von Motor und Getriebe durch das Gehäuse 12 hindurchbewegbar ist und ggf. (was in Fig. 1 nicht gezeigt ist) auch am oberen Ende des Gehäuses 12, je nach Hub, mehr oder weniger herausragen kann.

Bei der in Fig. 1 dargestellten Ausführungsform ist das obere Ende 50 der Spindel 46 mit einer Verlängerung oder einem Verlängerungszapfen 52 versehen, der aus dem Gehäuse 12 austreten und in ein am Gehäuse befestigtes Schauglas 98 eintreten kann, zur sichtbaren Anzeige des Hubes.

Nach einer bevorzugten Ausführungsform der Erfindung ist nun dieses Schauglas 98 Teil einer Handkurbel 56, mit der das Getriebe 16 z.B. in Notfällen betätigt, d.h. gedreht werden kann.

In Fig. 1 ist die Handkurbel 56 in beiden Anwendungspositionen dargestellt.

Die Handkurbel 56 hat einen Griff 58, der aus einem durchsichtigen Material besteht und hohl ausgebildet ist, d.h. er ist mit einer Sacklochbohrung 62 versehen, in welche der Zapfen 52 zur Anzeige der Position der Spindel 46 eintreten kann. Der Griff 58, der drehbar in der Handkurbel 56 gelagert ist, ist hierzu mit einem Gewinde 60 versehen, das in einen Ansatz 100 an der Oberseite des Gehäuses 12 einschraubbar ist. Auf diese Weise kann die Handkurbel an der Oberseite des Gehäuses 12, wie in Fig. 1 dargestellt, befestigt werden, wobei ihr Griff 58 in dieser Position als Schauglas für die Stellungsanzeige der Spindel 46 dient.

An der rechten Seite in Fig. 1 ist die Handkurbel in ihrer zweiten Arbeitsposition dargestellt. Die Handkurbel 56 hat hierzu eine Abkröpfung 64 rechtwinklig zur Kurbel und diese Abkröpfung 64 ist an ihrer Stirnseite mit einem Kegelzahnrad 66 versehen oder in Form eines Kegelzahnrades ausgebildet.

Die im Schnitt zylindrische Abkröpfung 64 der Handkurbel 56 wird in eine zylindrische Bohrung 70, die im Gehäuse 12 ausgebildet ist, eingeschoben und das Kegelrad 66 der Handkurbel 56 tritt in Eingriff mit einem Kegelrad 68, das auf der Achswelle 36, drehfest mit dieser, angeordnet ist.

Durch Drehen der Handkurbel kann somit das Kegelrad 68 und damit das gesamte Getriebe und die Mutter 34 gedreht werden.

Nach dieser Betätigung (z.B. in Notfällen) wird die Handkurbel nur aus der Bohrung 70 herausgezogen und mittels des Gewindes 60 am Griff 58 durch Einschrauben in den Ansatz 100 am Gehäuse 12 befestigt. Die Abkröpfung 64 und das Kegelrad 66 der Handkurbel ragen in dieser Position in eine entsprechende Ausnehmung (nicht gezeigt) an der Oberseite des Gehäuses 12 hinein.

Die Bohrung 70 zur Lagerung der Handkurbel bei Betätigung des Gewindes kann,nachdem die Handkurbel herausgenommen worden ist, durch einen nicht näher dargestellten Stopfen geschlossen werden.

Die Handkurbel hat somit zwei Funktionen, nämlich Drehung des Gewindes in Notfällen und Bildung eines Schauglases für die Positionsanzeige der Spindel 46.

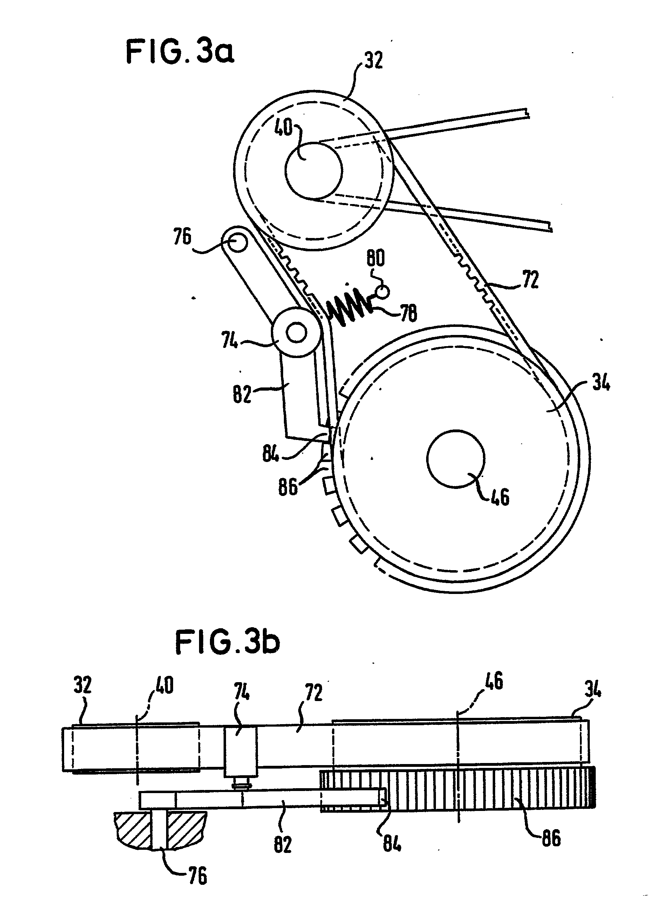

Die Fig. 3a und 3b zeigen ein Detail des Getriebes.

Fig. 3a zeigt in Draufsicht die Mutter 34, die vom Zahnrad 32 über den Zahnriemen 72 angetrieben wird.

Auf dem treibenden Trum des Zahnriemens ist eine Rolle 74 vorgesehen, die um einen im Gehäuse gehaltenen Drehzapfen 76 schwenkbar ist. Die Rolle 74 wird von einer im Gehäuse bei 80 verankerten Zugfeder 78 ständig gegen das treibende Trum des Zahnriemens 72 angedrückt.

Die Rolle 74 ist mit einem Arm oder Hebel 82 versehen, der an seinem freien Ende eine Raste 84 besitzt, die auf die Mutter 34 zu gerichtet ist. Die letztere hat an ihrem Außenumfang eine Rasterung 86 und die Raste 84 rastet im Ruhezustand, d.h. bei stillstehendem Getriebe unter Ausnutzung des Durchhanges des Zahnriemens 72 in diese Rasterung 86 ein, wodurch die Mutter 34 gegen Drehung blockiert wird.

Wenn das Getriebe zu laufen beginnt, wird das durchhängende Trum des Zahnriemens 72 gespannt, wodurch die Spannrolle gegen die Kraft der Zugfeder 78 um den Drehzapfen 76 in Uhrzeigerrichtung (bezogen auf die Darstellung in Fig. 3a) geschwenkt und dadurch die Raste 84 von der Rasterung 86 gelöst wird. Im Ruhezustand hingegen kann der Zahnriemen 72 durchhängen, so daß die Zugfeder 78 die Spannrolle und damit den Hebel 84 und die Raste 86 heran und auf die Mutter 34 zu ziehen kann, wodurch die Raste 84 in die Rasterung 86 einrasten kann.

Wie Fig. 3b zeigt, ist die Rasterung 86 unabhängig und getrennt von der Verzahnung der Mutter 34 für den Zahnriemen 72 ausgebildet.

Die Raste 84 wird somit durch die Zugfeder 78 in die Rasterung 86 hineingezogen, hingegen durch den Zahnriemen 72, sobald dieser gespannt wird, von der Rasterung 86 abgehoben und gelöst.

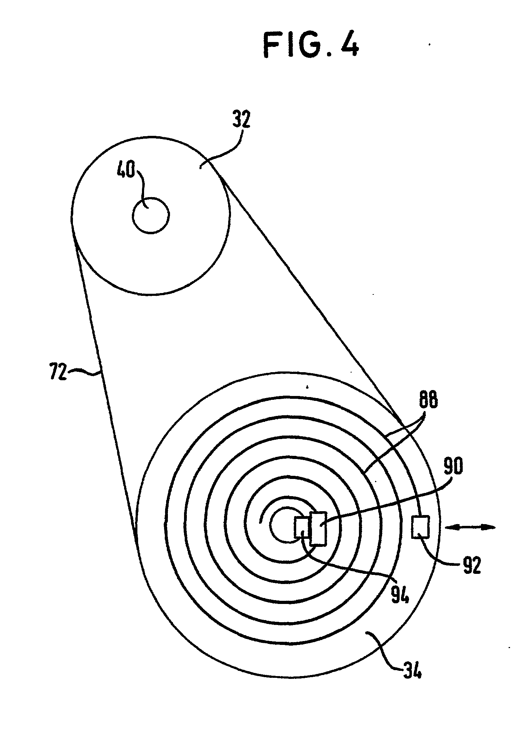

Fig. 4 zeigt schematisch eine Draufsicht auf eine Stirnfläche der Mutter 34. Die Mutter 34 wird, wie bereits beschrieben, vom Zahnrad 32 über den Zahnriemen 72 angetrieben.

Auf ihrer einen Stirnfläche ist nun, wie Fig. 4 zeigt, eine spiralförmige Nut 88 vorgesehen, die konzentrisch zur Mittelachse der Mutter 34 ausgebildet ist. In dieser Nut ist ein Nutstein 90 angeordnet und derart geführt (nicht dargestellt), daß er bei Drehung der Mutter 34 eine radiale Bewegung nach außen oder Innen ausführt.

Am Gehäuse sind, was in Fig. 4 nur angedeutet ist, geeignete Endschalter 92, 94 vorgesehen, mit denen der Nutstein 90 zusammenwirkt, d.h. beim Auftreffen des Nutsteins 90 auf einen der beiden Endschalter 92, 94 wird der betreffende Endschalter betätigt, was beispielsweise zum Umschalten der Drehrichtung des Getriebes benutzt werden kann.

Die Führung des Nutsteins in der spiralförmigen Nut erlaubt eine sehr feinfühlige Steuerung auch kleinster Hübe, es können aber auch sehr große Hübe mittels des Nutsteins und der Endschalter abgetastet werden.

**Patentansprüche**

1. Antriebsvorrichtung für die Spindel eines Ventils, insbesondere eines Membranventils, bestehend aus einem Elektromotor mit nachgeschaltetem Zahnriemen-Getriebe (16), über das eine mit der Spindel (46) gekoppelte Mutter (34) betätigbar ist, wobei der Elektromotor (14) und das Zahnriemen-Getriebe (16) zur Achse der Spindel (46) versetzt angeordnet sind, dadurch gekennzeichnet, daß der die Mutter (34) treibende Zahnriemen (72) durch eine auf dem treibenden Trum angeordnete Rolle (74) belastet ist, welche Rolle (74) mit einem Hebel (82) versehen ist, der eine Raste (84) aufweist, die bei stillstehendem Getriebe in eine Rasterung (86) am Umfang der Mutter (34) einrastet und dadurch diese gegen Drehung blockiert.

2. Antriebsvorrichtung nach Anspruch 1, dadurch gekennzeichnet, daß die Mutter (34) auf einer ihrer Stirnflächen eine spiralförmige Nut (88) hat, in der ein Nutstein (90) sitzt, der bei Drehung der Mutter (34) radial verschiebbar ist zur Betätigung von Endschaltern (92, 94).

3. Antriebsvorrichtung nach Anspruch 1, dadurch gekennzeichnet, daß das Zahnriemen-Getriebe (16) mittels einer Handkurbel (56) betätigbar ist, deren Griff (58) als Schauglas (98) zur Sichtanzeige der Position der Spindel (46) ausgebildet ist.

4. Antriebsvorrichtung nach Anspruch 3, dadurch gekennzeichnet, daß der Griff (58) am Gehäuse (12) der Vorrichtung derart befestigbar ist, daß das freie Ende der Spindel (46) in den hohlen, aus einem durchsichtigen Material bestehenden Griff (58) eintreten kann.

**Claims**

1. Valve actuator for the spindle of a valve, in particular of a diaphragm valve, consisting of an electric motor with a succeeding stage toothed belt power transmission (16), through which a nut (34) coupled with the spindle (46) can be actuated, whereby the electric motor (14) and the toothed belt power transmission (16) are arranged staggered on the axis of the spindle (46), thereby characterized that the toothed belt (72) moving the nut (34) is loaded with a roller (74) located on the driving strand, which roller (74) is equipped with a lever (82) which has a notch (84), which engages into a catch (86) on the circumference of the nut (34) when the power transmission is not in operation and thus blocks the nut against rotation.

2. Valve actuator according to claim 1, thereby characterized that the nut (34) has a spiral groove (88) on one of its faces, in which a groove stone (90) is seated, which can be slid radially for actuating limit switches (92, 94) when the nut (34) rotates.

3. Valve actuator according to claim 1, thereby characterized that the toothed belt power transmission (16) can be operated by means of a hand crank (56), the handle of which is constructed as an inspection glass (98) for visual display of the position of the spindle (46).

4. Valve actuator according to claim 3, thereby characterized that the handle (58) on the housing (12) of the device can be fastened in such a way that the free end of the spindle (46) can enter into the hollow handle (58) consisting of a transparent material.

**Revendications**

1. Dispositif de commande pour la broche d'une valve, en particulier d'une valve à diaphragme, se composant d'un moteur électrique à transmission à courroie dentée (16) intercalée à la suite, à l'aide duquel peut être actionné un écrou (34) accouplé à la broche, le moteur électrique (14) et la transmission à courroie denté (16) se trouvant disposés de façon décalée par rapport à l'essieu de la broche (46), caractérisé par le fait que la courroie dentée (72) entraînant l'écrou (34) est chargée par un rouleau (74) disposé sur le bout entraîneur, le rouleau (74) étant équipé d'un levier (82) qui possède une encoche qui, lorsque la transmission est arrêtée, engrène dans un cran d'arrêt (86) se trouvant sur la circonférence de l'écrou (34) en le bloquant contre toute rotation.

2. Dispositif de commande suivant la revendication 1, caractérisé par le fait que l'écrou (34) porte sur l'une de ses faces une rainure hélicoïdale (88) dans laquelle se trouve un coulisseau (90) déplaçable radialement lorsque l'écrou (34) est tourné, pour actionner des interrupteurs de fin de course (92, 94).

3. Dispositif de commande suivant la revendication 1, caractérisé par le fait que la transmission à courroie dentée (16) peut être actionnée à l'aide d'une manivelle (56) dont la poigné (58) est construite sous forme de voyant (98) pour visualiser la position de la broche (46).

4. Dispositif de commande suivant la revendication 3, caractérisé par le fait que la poignée (58) peut être fixée sur le boîtier (12) du dispositif de telle sorte que le bout libre de la broche (46) puisse entrer dans la poignée creuse (58) en matière transparente.

# FIG.1

FIG.2

# FIG.3a

# FIG.3b

# FIG. 4